# EUROPÄISCHE PATENTSCHRIFT

(11) **EP 4 348 376 B1**
(45) Veröffentlichungstag und Bekanntmachung des Hinweises auf die Patenterteilung: **22.07.2026**
(21) Anmeldenummer: 22733303.6
(22) Anmeldetag: 25.05.2022
(51) Int. Cl.: G05D 1/00

(54) **VERFAHREN ZUM BESTIMMEN EINES BEWEGUNGSPFADES AUF EINEM UNTERGRUND**
METHOD FOR DETERMINING A MOVEMENT PATH ON A SURFACE
PROCÉDÉ DE DÉTERMINATION D'UN TRAJET DE DÉPLACEMENT SUR UNE SURFACE

(30) Priorität: 02.06.2021 DE 102021205620
(43) Veröffentlichungstag der Anmeldung: 10.04.2024
(73) Patentinhaber: Robert Bosch GmbH, 70442 Stuttgart (DE)
(72) Erfinder: SCHIRMER, Robert, 75328 Schoemberg (DE); SCHERER, Sebastian, 72074 Tuebingen (DE)
(86) Internationale Anmeldenummer: PCT/EP2022/064167
(87) Internationale Veröffentlichungsnummer: WO 2022/253658

(56) Entgegenhaltungen:
- EP-B1- 2 407 847
- KR-A- 20210 028 426
- US-A1- 2021 096 560

## Beschreibung

Die vorliegende Erfindung betrifft ein Verfahren zum Bestimmen eines Bewegungspfades auf einem Untergrund in einer Umgebung, entlang welchen Bewegungspfades sich ein mobiles Gerät wie z.B. ein Saug- oder Wischroboter oder ein anderer Haushaltsroboter bewegen soll, eine Recheneinheit und ein Computerprogramm zu dessen Durchführung sowie ein mobiles Gerät.

### Hintergrund der Erfindung

Mobile Geräte wie z.B. Saug- oder Wischroboter oder andere Haushaltsroboter bewegen sich typischerweise entlang eines Bewegungspfades über einen Untergrund in einer zu bearbeitenden Umgebung wie z.B. einer Wohnung. Der Bewegungspfad wird hierzu in der Regel so geplant bzw. bestimmt, dass dieser einerseits möglichst kurz ist, andererseits aber den gesamten gewünschten Bereich, der z.B. gesaugt werden soll, abdeckt.

Die US 2021/096560 A1 und KR 10-2021-0028426 A offenbaren einen autonomen Reinigungsroboter und die EP 2 407 847 B1 offenbart ein selbsttätig verfahrbares Gerät.

### Offenbarung der Erfindung

Erfindungsgemäß werden ein Verfahren zum Bestimmen eines Bewegungspfades eine Recheneinheit und ein Computerprogramm zu dessen Durchführung sowie ein mobiles Gerät mit den Merkmalen der unabhängigen Patentansprüche vorgeschlagen. Vorteilhafte Ausgestaltungen sind Gegenstand der Unteransprüche sowie der nachfolgenden Beschreibung.

Die Erfindung beschäftigt sich mit mobilen Geräten, die sich entlang eines bestimmten Bewegungspfades auf einem Untergrund in einer Umgebung bewegen bzw. bewegen sollen. Ein typisches Beispiel für ein solches mobiles Gerät ist ein Haushaltsroboter wie z.B. ein Saug- und/oder Wischroboter. Wie eingangs schon erwähnt, wird ein solcher Bewegungspfad hierbei in der Regel derart bestimmt, dass dieser einerseits möglichst kurz ist, andererseits aber den gesamten gewünschten Bereich, der z.B. gesaugt werden soll, abdeckt. Wenngleich die Erfindung nachfolgend vorwiegend mit Bezug auf Haushaltsroboter beschrieben wird, so ist sie gleichermaßen bei anderen Robotern oder mobilen Geräten, die einem Bewegungspfad folgen bzw. folgen sollen, anwendbar, z.B. Rasenmäher, Boden- oder Straßenreinigungsgeräte wie Straßenkehrroboter (bzw. automatisierte Stra-ßenkehrmaschinen) und dergleichen.

Für mobile Geräte wie Haushaltsroboter sind die Bewegungen in der Umgebung (z.B. im Haushalt bzw. in der Wohnung) insbesondere systematisch und geplant durchführen. Dazu verfügen Haushaltsroboter z.B. über Sensoren wie Laser-Scanner (Entfernungsmesser) oder Kameras, um ihre Umgebung wahrzunehmen und anhand entsprechender Informationen wie z.B. Positionen, Abständen, Entfernungen und Abmessungen zu (unüberwindbaren) Hindernissen eine Karte ihrer Umgebung aufzubauen, innerhalb derer sie schließlich ihre Bewegungen, z.B. das systematische Absaugen einer gesamten Wohnung planen können (eng. "Coverage Path Planning" oder "Abdeckungsproblem"). In ihrer Umgebung nehmen diese Roboter typischerweise Hindernisse wie Wände oder Möbel wahr und tragen diese in die Karte ein. Auf diese Weise kann also ein Bereich des Untergrunds, der durch die Bewegung des mobilen Geräts bzw. Roboters abgedeckt werden soll, bestimmt werden.

Wie sich nun herausgestellt hat, gibt es auch Unebenheiten, die für das mobile Gerät zwar an sich überwindbar sind, die aber - bei Überwindung bzw. Überfahren - zu Beschädigungen führen können, sei es am mobilen Gerät oder am Untergrund. Auch kann das mobile Gerät stecken bleiben, sich verheddern oder sonstige Probleme haben. Bei solchen Unebenheiten handelt es sich insbesondere um Stufen, Erhebungen und/oder Absenkungen in dem Untergrund. Beispiele im Falle eines Haushaltsroboters sind die Kanten bzw. Ränder von Teppichen (die auf dem Boden liegen und überfahren werden können) oder auch unterschiedliche Höhen zwischen den Böden zweier aneinandergrenzender Räume oder bei verschiedenen Bodenbelägen. Im Falle eines Straßenkehrroboters können dies z.B. (niedrige) Bordsteinkanten sein.

Vor diesem Hintergrund wird eine Möglichkeit vorgeschlagen, dieses Problem zu umgehen oder zumindest zu reduzieren. Hierzu werden Umgebungsinformationen erhalten und es wird ein Bereich des Untergrunds, der durch die Bewegung des mobilen Geräts abgedeckt werden soll, bestimmt. Unter Berücksichtigung der Umgebungsinformationen wird dann bestimmt, ob sich innerhalb des Bereiches (der mit dem Bewegungspfad abgedeckt werden soll) wenigstens eine von dem mobilen Gerät überwindbare Unebenheit in dem Untergrund befindet. Falls wenigstens eine solche Unebenheit vorhanden ist, wird der Bewegungspfad unter Berücksichtigung der wenigstens einen Unebenheit bestimmt.

Zweckmäßigerweise wird eine Unebenheit dabei nur dann als solche berücksichtigt, wenn sie zumindest ein vorgegebenes kritisches Maß, z.B. eine bestimmte Höhe oder Tiefe oder auch Länge oder Breite, überschreitet (andernfalls kann davon ausgegangen werden, dass eine Unebenheit kein Problem darstellt). Das mobile Gerät wird dann insbesondere auch entlang des bestimmten Bewegungspfades bewegt, sodass z.B. der Untergrund abgesaugt oder gewischt wird.

Diese Umgebungsinformationen werden dabei z.B. zumindest teilweise unter Verwendung einer Kamera erhalten (sie umfassen dann also Kamerainformationen bzw. Kameradaten). Sie können aber auch zumindest teilweise unter Verwendung eines Inertialsensors (oder mehrerer Inertialsensoren) und/oder einer Odometrie erhalten werden. Odometrie bezeichnet dabei eine Methode der Schätzung von Position und Orientierung (Lageschätzung) des mobilen Geräts anhand der Daten seines Vortriebsystems. Durch Räder angetriebene Geräte benutzen dafür z.B. die Anzahl der Radumdrehungen.

Eine Kamera oder Sensoren wie Inertialsensoren sind z.B. in dem mobilen Gerät integriert und können zum Erfassen der Umgebungsinformationen verwendet werden. Diese können dann an eine Recheneinheit (Steuergerät) im mobilen Gerät weitergegeben werden, in der dann der Bewegungspfad wie erwähnt bestimmt wird. Denkbar ist aber auch, dass diese Umgebungsinformationen, ggf. mit weiteren Daten, an einen Server oder ein Rechenzentrum übermittelt werden (z.B. über drahtlose Kommunikation); dort kann dann der Bewegungspfad wie erwähnt bestimmt und zurück an das mobile Gerät gesendet werden.

Das Bestimmen des Bewegungspfades umfasst dabei vorzugsweise, eine Anzahl an Überwindungen der wenigstens einen Unebenheit durch den Bewegungspfad, unter Berücksichtigung einer gesamten Länge des Bewegungspfades, zu minimieren. Zumindest sollte diese Anzahl dabei geringer sein als die Anzahl an Überwindungen dieser Unebenheiten, wenn diese nicht als solche Berücksichtigt würden. Im Falle eines Teppichs auf einem Boden, dessen Ränder solche Unebenheiten darstellen, würde bei bisherigem Vorgehen der Bewegungspfad z.B. mehrmals über den Teppich führen (der Teppich würde also an sich gar nicht vom Rest des Untergrunds oder Boden unterschieden). Bei Anwendung der Erfindung in bevorzugter Ausführungsform hingegen würde der Bewegungspfad zunächst außerhalb des Teppichs verlaufen, d.h. es wird zunächst der Bereich außerhalb des Teppichs gesaugt, und dann einmal auf den Teppich hinaufführen; dort würde der Bewegungspfad dann mehrmals auf dem Teppich herumführen (je nach Größe des Teppichs), so dass z.B. der Teppich abgesaugt wird, und schlussendlich darauf enden oder aber ggf. auch wieder herunterführen.

Auf diese Weise vermeidet das mobile Gerät bzw. der Haushaltsroboter das häufige Überfahren dieser problematischen Kanten bzw. Unebenheiten, bleibt dadurch deutlich seltener stecken und schont dadurch sowohl sich selbst als auch den Boden bzw. den Untergrund. Eine etwas längere Gesamtstrecke des Bewegungspfades kann hierfür ohne weiteres in Kauf genommen werden.

Ein besonderer Aspekt dabei ist, dass das mobile Gerät z.B. problematische Kanten bzw. Unebenheiten mit Hilfe seiner Sensoren (z.B. einer Kamera) erkennt, sie neben regulären (unüberwindbaren) Hindernissen (wie z.B. Wände, Möbel) in seine Karte einträgt, und schließlich diese Information für die Bewegungsplanung so nutzt, dass die Anzahl der Überwindungen der problematischen Kanten minimiert wird.

Die Daten des verwendeten Sensors werden bevorzugt ständig ausgewertet, um kritische Kanten (Unebenheiten) zu erkennen. Dies kann zum Beispiel unter Verwendung eines künstlichen neuronalen Netzes erfolgen, das auf einem Onboard-Computer (Steuergerät) oder auf spezieller Hardware zur beschleunigten Auswertung auf dem mobilen Gerät läuft. Ein solches neuronales Netz kann hierfür z.B. anhand von Beispielbildern mit entsprechenden Unebenheiten wie Teppichrändern oder Bodenstufen trainiert werden. Die mit der Kamera erfassten Umgebungsinformationen, also Bilder, können dann daraufhin analysiert werden, ob auf den Bildern relevante Kanten bzw. Unebenheiten vorhanden sind.

Ein alternativer Ablauf der kritischen Kantenerkennung erfolgt z.B. über den erwähnten Inertialsensor (also eine inertiale Messeinheit) und die Odometrie (Radodometrie). Hierbei wird beim Übergang eines Bodenbelags zum anderen, oder allgemein einer Unebenheit, erkannt, dass das mobile Gerät "springt" (d.h. eine vertikale Beschleunigung erfährt) und/oder die Radodometrie kurz inkonsistent wird. Durch das Aufzeichnen dieser "Sondermomente" während der Kartierung (Bestimmen des Bereiches des Untergrunds, der durch die Bewegung des mobilen Geräts abgedeckt werden soll), kann die Position kritischer Kanten (Unebenheiten) abgeleitet bzw. bestimmt werden. Es versteht sich, dass auch beide Varianten mit Kamera und Inertialsensor bzw. Odometrie kombiniert werden können, sofern für beide Varianten die nötigen Einrichtungen bzw. Sensoren vorhanden sind.

Während sich das mobile Gerät bewegt bzw. der Roboter fährt und seine Karte z.B. mit einem existierenden Kartierungsverfahren aufbaut (z.B. unter Verwendung eines Entfernungssensors und erkannter Hindernisse und/oder mit Hilfe einer Kamera und visueller Merkmale), können die Positionen der erkannten kritischen Kanten bzw. Unebenheiten innerhalb der Karte zusammen mit dieser abgespeichert werden. Je nach Art können die Kanten unterschiedlich kritisch sein, also z.B. bei der Bestimmung des Bewegungspfades berücksichtigt werden oder auch nicht. Denkbar sind auch noch weitere Unterscheidungen, z.B. nach Unebenheiten bzw. Kanten, die gar nicht überfahren werden sollten oder nur wenige Male.

Während der Pfadplanung (Bestimmung des Bewegungspfades) werden neben der Abdeckung der gesamten zu reinigenden Fläche (Bereich) und einer möglichst kurzen Gesamtdistanz der zu fahrenden Strecke auch die Anzahl der Überschreitungen kritischer Kanten und deren Schwere bzw. Kritikalität berücksichtigt, was in der Regel zu einem anderen als dem nach bisherigem Vorgehen erhältlichen Pfadplanungsergebnis führt.

Vorteilhafterweise umfasst das Bestimmen des Bewegungspfades, dass der Bereich in mehrere Teilbereiche unterteilt wird, innerhalb welcher jeweils ein Teil-Bewegungspfad bestimmt wird, wobei die Teilbewegungspfade zusammenhängen und den Bewegungspfad bilden, und wobei die wenigstens eine Unebenheit wenigstens einen Teilbereich zumindest teilweise begrenzt. Insbesondere kann bei mehreren Unebenheiten bzw. Kanten ein solcher Teilbereich vollständig begrenzt sein. So kann z.B. ein Teppich einen eigenen Teilbereich bilden, der durch die Ränder des Teppichs als Kanten bzw. Unebenheiten begrenzt wird. Zweckmäßigerweise umfasst das Bestimmen eines jeden Teil-Bewegungspfads dann eine Minimierung einer Länge des (gesamten) Bewegungspfades.

Gemäß dem Ansatz von "Acar, Choset, Rizzi, Atkar, Hull: Morse Decompositions for Coverage Tasks. The International Journal of Robotics Research, 2002, 21(4), 331-344" wird das Abdeckungsproblem auf modernen Robotern z.B. als verallgemeinertes Handlungsreisenden-Problem (eng.: "Generalized Travelling Salesman Problem") formuliert. Das verallgemeinerte Handlungsreisenden-Problem ist über einen Graphen V (Knoten), E (Kanten), w (Kantengewichte) definiert. Für das Abdeckungsproblem wird dies folgenderweise erreicht:
Die abzudeckende Fläche (Bereich des Untergrunds, der durch die Bewegung des mobilen Geräts abgedeckt werden soll), gegeben durch einen Kartierungsalgorithmus, wird in diskrete Parzellen bzw. Polygone aufgeteilt (eng.: "decomposition cells"). Wenn die Parzellen bzw. Polygone bestimmte Eigenschaften erfüllen, sind Abdeckungspfade (Teil-Bewegungspfade) für diese Parzellen bzw. Polygone trivial zu berechnen. So können z.B. konvexe Polygone durch "hin-und-her Mäandern" vollständig abgedeckt werden (ein Beispiel hierfür ist in den Figuren gezeigt).

Nach der Dekomposition der abzudeckenden Fläche wird z.B. für jede Parzelle eine Menge von Lösungen berechnet: dies kann z.B. durch Variieren des Startpunktes erreicht werden (der Roboter mäandert startend oben links oder aber startend unten rechts, etc.). Die Menge aller Lösungen, gruppiert nach Parzellen, bildet dann die Knoten des verallgemeinerten Handlungsreisenden V.

Die Kantenmenge E wird z.B. durch alle möglichen Transitionen zwischen Knotenpaaren in V berechnet. Die Kantengewichte w enkodieren die Kosten einer Parzelle und eines Transitionspfades (Überwindung einer Unebenheit). Diese Kosten können jegliche Kriterien abbilden: z.B. Pfadlänge, Anzahl an Drehungen des Roboters, etc.

Die Lösung des Abdeckungsproblems ist also äquivalent zu diesem verallgemeinerten Handlungsreisenden-Problem, wobei pro Parzelle ein Pfad ausgewählt wird.

Die im Rahmen der Erfindung vorgeschlagene Berücksichtigung von Unebenheiten in der Bestimmung des Bewegungspfades lässt sich besonders bevorzugt im ersten Teil dieses Verfahrens anwenden: bei der polygonalen Dekomposition, also der Aufteilung des Bereiches des Untergrunds, der durch die Bewegung des mobilen Geräts abgedeckt werden soll, in Teilbereiche. Hier werden kritischen Kanten (Unebenheiten) z.B. als separates Polygon gewertet, woraufhin dieses als Parzelle verwendet wird und der Roboter diese nicht mehr überschreitet, außer um die Parzelle zu erreichen und ggf. zu verlassen.

Denkbar ist in diesem Zusammenhang auch, dass eine Überwindung einer solchen Kante bzw. Unebenheit mit höheren Kosten berücksichtigt wird als andere Bewegungen. Das vorgeschlagene Vorgehen ermöglicht es auch, die Kantengewichte w zu berechnen, da der Roboter hierdurch auch bei Transitionspfaden (Überwindungen) die kritischen Kanten vermeiden würde.

Die konkrete Lösung dieses (abgewandelten) Handlungsreisenden-Problems bleibt damit im Grund wie bisher, es erfolgt lediglich im ersten Schritt eine Abwandlung bei der Dekomposition in Parzellen bzw. Teilbereiche. Für weitere Ausführungen zur Anwendung dieses (abgewandelten) Handlungsreisenden-Problems bei mobilen Geräten sei auf das genannte Dokument verwiesen.

Erfindungsgemäß, umfasst das Bestimmen des Bewegungspfades eine Minimierung von Kosten einer Länge des (gesamten) Bewegungspfades, wobei Kosten für Bewegungspfadabschnitte, in denen die wenigstens eine Unebenheit überschritten wird, höher gewichtet werden als für übrige Bewegungspfadabschnitte. Dieser Ansatz kann z.B. ohne das erwähnte Handlungsreisenden-Problem auskommen, aber trotzdem können die unerwünschten Überwindungen von Unebenheiten reduziert bzw. minimiert werden. Denkbar ist auch eine Kombination beider Varianten, so können z.B. unterschiedliche Teilbereiche unterschiedlich behandelt werden. Auch weitere Möglichkeiten der Pfadplanung sind denkbar.

Vorzugsweise können auch mit Hilfe von maschinellem Lernen Objekte erkannt werden, um gewisse Objektklassen, die nicht zwangsläufig (unüberwindbare) Hindernisse sind (z.B. Kabel, kleine Gegenstände), gezielt zu umfahren, insbesondere wenn diese nicht als relevante überwindbare Unebenheiten berücksichtigt werden. Denkbar ist aber auch, dass z.B. Kabel als relevante Unebenheiten behandelt werden; so kann durch ein Kabel, ggf. zusammen mit Wänden, bei der Bestimmung des Bewegungspfades ein eigener Teilbereich gebildet werden.

Das Erfassen der Umgebungsinformationen (und Erkennen von Unebenheiten) für die Bestimmung des Bewegungspfades erfolgt z.B. während einer (initialen) Kartierung des Raumes, also einer Bestimmung des Bereiches des Untergrunds, der durch die Bewegung des mobilen Geräts abgedeckt werden soll. Dies kann z.B. bei Erstinbetriebnahme des mobilen Geräts (in einer neuen Umgebung), aber auch jedes Mal, nachdem der Bewegungspfad durchlaufen wurde, erneut erfolgen. Auf diese Weise kann die Erkennung der Unebenheiten z.B. stetig verbessert werden.

Eine erfindungsgemäße Recheneinheit, z.B. ein Steuergerät eines mobilen Geräts wie z.B. eines Haushaltsroboters, ist, insbesondere programmtechnisch, dazu eingerichtet, ein erfindungsgemäßes Verfahren durchzuführen.

Die Erfindung betrifft auch ein mobiles Gerät wie z.B. einen Haushaltsroboter, insbesondere Saug- und/oder Wischroboter, Rasenmäher oder ein Boden- oder Straßenreinigungsgerät. Das mobile Gerät weist neben der erwähnten Recheneinheit dann insbesondere auch wenigstens eine Sensoreinheit wie z.B. eine Kamera und/oder einen Inertialsensor auf, um die Umgebungsinformationen zu erfassen.

Auch die Implementierung eines erfindungsgemäßen Verfahrens in Form eines Computerprogramms oder Computerprogrammprodukts mit Programmcode zur Durchführung aller Verfahrensschritte ist vorteilhaft, da dies besonders geringe Kosten verursacht, insbesondere wenn ein ausführendes Steuergerät noch für weitere Aufgaben genutzt wird und daher ohnehin vorhanden ist. Geeignete Datenträger zur Bereitstellung des Computerprogramms sind insbesondere magnetische, optische und elektrische Speicher, wie z.B. Festplatten, Flash-Speicher, EEPROMs, DVDs u.a.m. Auch ein Download eines Programms über Computernetze (Internet, Intranet usw.) ist möglich.

Weitere Vorteile und Ausgestaltungen der Erfindung ergeben sich aus der Beschreibung und der beiliegenden Zeichnung.

Die Erfindung ist anhand eines Ausführungsbeispiels in der Zeichnung schematisch dargestellt und wird im Folgenden unter Bezugnahme auf die Zeichnung beschrieben.

### Kurze Beschreibung der Zeichnungen

- Figur 1: zeigt schematisch ein erfindungsgemäßes mobiles Gerät in einer bevorzugten Ausführungsform in einer Umgebung.
- Figur 2: zeigt schematisch einen Bewegungspfad, der mittels eines erfindungsgemäßen Verfahrens in einer bevorzugten Ausführungsform bestimmt worden ist.
- Figur 3: zeigt schematisch einen Ablauf eines erfindungsgemäßen Verfahrens in einer bevorzugten Ausführungsform.

### Ausführungsform(en) der Erfindung

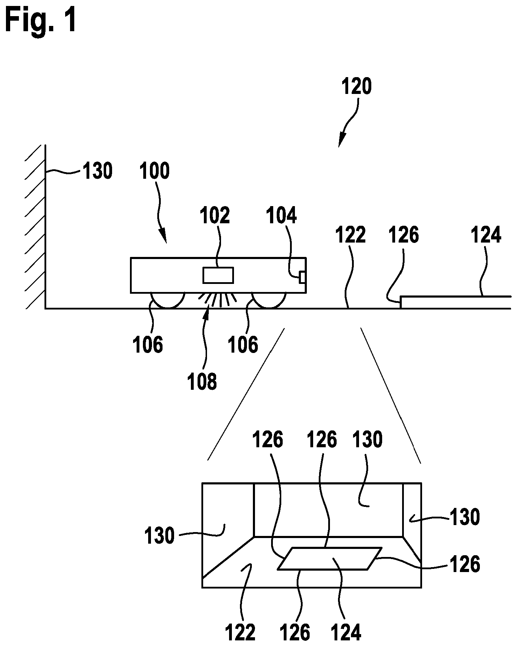

In Figur 1 ist schematisch ein erfindungsgemäßes mobiles Gerät 100 in einer bevorzugten Ausführungsform in einer Umgebung 120, z.B. einem Raum, dargestellt. Wie im oberen Teil der Figur 1 zu sehen, handelt es sich bei dem mobilen Gerät 100 beispielhaft um einen Staubsaugerroboter mit Rädern 106, einer Saugeinrichtung 108, einer als Steuergerät ausgebildeten Recheneinheit 102 sowie einer Kamera 104.

Der Staubsaugerroboter 100 befindet sich auf einem Untergrund 122, einem Boden, des Raums 120, der auf der linken Seite z.B. durch eine Wand 130 als ein Hindernis begrenzt wird. Rechts des Staubsaugerroboters 100 liegt auf dem Boden ein Teppich 124, der auch Teil des Untergrunds ist und - wie auch der Boden - vom Staubsaugerroboter abgesaugt werden soll. Die Ränder 126 des Teppichs 124 bilden dabei jeweils eine Unebenheit im Untergrund 122, die von dem Staubsaugerroboter 100 überwunden werden kann.

Im unteren Teil der Figur 1 ist eine Ansicht des Raumes 120 aus Sicht der Kamera 104 des Staubsaugerroboters 100 gezeigt, z.B. ein damit aufgenommenes Bild. Darin sind alle vier Ränder 126 des Teppichs 124 zu sehen, außerdem weitere Wände 130 des Raumes. Durch geeignete Auswertung solcher Bilder bzw. Aufnahmen (wenn sich der Staubsaugerroboter durch den Raum bewegt) können diese Ränder 126 als überwindbare Unebenheiten erkannt werden.

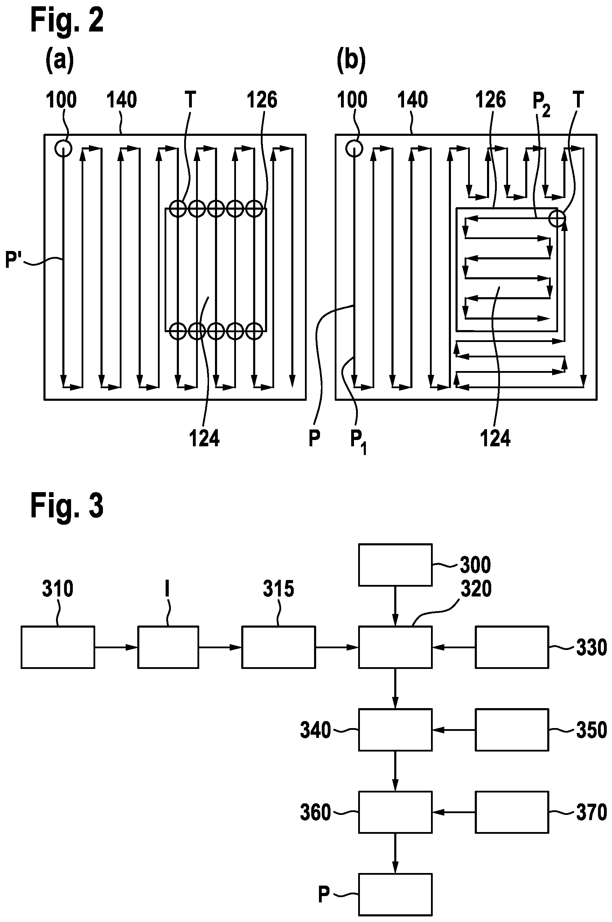

In Figur 2 ist schematisch ist in Abbildung (a) auf der linken Seite ein Bereich 140 gezeigt, der durch die Bewegung des Staubsaugerroboters 100 (beispielhaft in der linken oberen Ecke angeordnet) abgedeckt werden soll. Bei dem Bereich 140 kann es sich um einen Bereich des Untergrunds (vgl. Figur 1) handeln, der gesaugt werden soll. Beispielhaft umfasst der Bereich 140 einen rechteckigen Raum, begrenzt durch Wände. Es versteht sich, dass in der Praxis der Bereich sich z.B. über mehrere Räume erstrecken kann und außerdem durch z.B. Möbel als unüberwindbare Hindernisse begrenzt ist.

Der Teppich 124 ist von dem Bereich 140 umfasst. In Abbildung (a) ist nun ein Bewegungspfad P' gezeigt, den der Staubsaugerroboter abfahren soll bzw. entlang dessen er sich bewegen soll; dabei sind der Teppich 124 bzw. seine Ränder 126 nicht weiter berücksichtigt. Der hier gezeigte Bewegungspfad P' ergibt sich vielmehr dadurch, dass z.B. eine Minimierung der Länge des Bewegungspfades vorgenommen wird. Dabei kann beispielhaft der gesamte Bereich 140 direkt berücksichtigt werden, eine Aufteilung in Parzellen oder dergleichen ist hier nicht relevant (da ohnehin ein einfaches Polygon vorliegt).

Dabei ist auch zu sehen, dass der Staubsaugerroboter 100 entlang des Bewegungspfades P' mehrmals die Ränder 126 des Teppichs, also Unebenheiten im Untergrund, überwinden bzw. überfahren muss. Jede Überwindung T ist mittels eines Kreises eingezeichnet. Dieser Bewegungspfad P' mit den vielen Überwindungen kann zu Beschädigungen am Staubsaugerroboter oder dessen Verheddern und damit einer Unterbrechung des Saugvorgangs führen.

In Abbildung (b) auf der rechten Seite ist der Bereich 140 erneut gezeigt. Dabei ist ein Bewegungspfad P gezeigt, den der Staubsaugerroboter abfahren soll bzw. entlang dessen er sich bewegen soll; dabei sind der Teppich 124 bzw. seine Ränder 126 als Unebenheiten berücksichtigt. Der hier gezeigte Bewegungspfad P ergibt sich beispielhaft aus zwei Teil-Bewegungspfaden P1 und P2, die zusammenhängen.

Der erste Teilbewegungspfad P1 deckt den gesamten Teilbereich außerhalb des Teppichs 124 ab, der zweite Teilbewegungspfad P2 den Teppich 124 als Teilbereich. Dabei gibt es nur eine Überwindung T, der Bewegungspfad P endet auf dem Teppich. Dieser Bewegungspfad P kann erreicht werden, indem die Ränder 126 des Teppichs 124 als Unebenheiten berücksichtigt werden, die zusammen ein Polygon (hier ein Rechteck) bilden. Dies kann als ein separater Teilbereich bzw. eine Parzelle im Rahmen des schon erwähnten verallgemeinerten Handlungsreisenden-Problems berücksichtigt werden.

Damit wird auch hier der gesamte Bereich 140 vom Bewegungspad P abgedeckt, im Vergleich zum Bewegungspfad P' gemäß Abbildung (a) gibt es hier aber deutlich weniger Überwindungen T. Dies reduziert das Risiko von Beschädigungen und eines Abbruchs des Saugvorgangs.

In Figur 3 ist schematisch ein Ablauf eines erfindungsgemäßen Verfahrens in einer bevorzugten Ausführungsform dargestellt, der insbesondere das Bestimmen eines Bewegungspfades umfasst, wie der z.B. in Bezug auf Figur 2, dort insbesondere Abbildung (b) näher erläutert ist.

In einem ersten Schritt 300, z.B. mit bzw. nach Einschalten des Staubsaugerroboters, wird z.B. innerhalb der Umgebung der Bereich bestimmt, der durch die Bewegung des Staubsaugerroboters abgedeckt werden soll. Dies kann auf übliche Weise wie z.B. unter Verwendung von Abstandssensoren und Kameras erfolgen, wie eingangs erwähnt. Mit anderen Worten erfolgt eine Kartierung.

In einem Schritt 310 werden zudem Umgebungsinformationen I erhalten, z.B. von der Kamera des Staubsaugerroboters. Diese Umgebungsinformationen I umfassen dabei z.B. Daten oder Bilder, die Aufschluss über mögliche Unebenheiten wie die schon erwähnten Ränder des Teppichs geben. In einem Schritt 315 wird dann bestimmt, ob sich innerhalb des Bereichs tatsächlich relevante Unebenheiten befinden, die berücksichtigt werden sollten.

In einem Schritt 320 erfolgt z.B. eine polygonale Dekomposition des schon bestimmten Bereichs, dabei werden insbesondere die gemäß Schritt 310 erhaltenen Umgebungsinformationen I bzw. die Unebenheiten berücksichtigt. Weiterhin kann dabei gemäß Schritt 330 eine bestimmte polygonale Dekompositionsstrategie gewählt oder berücksichtigt werden, also z.B. eine Strategie in welche Art von Polygonen der Bereich aufgeteilt wird. Beispielsweise kann dabei die Überlegung angestellt werden, ob sich konvexe Polygone erstellen lassen, ob sich diese mittels paralleler Linien (als Teile des Bewegungspfads) abfahren lassen, ob sogar Rechtecke oder Quadrate als Polygone möglich sind, oder ob es gesonderte Polygone geben soll; letzteres kann insbesondere für die Berücksichtigung der Unebenheiten bzw. kritischen Kanten relevant sein.

Auf diese Weise erhaltene Polygone werden dann jeweils einzeln in einem Schritt 340 z.B. unter Verwendung eines Lösungsgenerators gelöst. Das Lösen eines Polygons bedeutet dabei, dass für das betreffende Polygon - also einen Teilbereich des gesamten Bereichs - ein Teil-Bewegungspfad bestimmt wird. Dabei kann insbesondere gemäß Schritt 350 für jedes Polygon eine individuelle Lösungsstrategie verwendet werden. Beispielsweise kann überlegt werden, ob entlang dominanter Achsen verfahren werden soll oder wie groß die Distanz zu etwaigen Hindernissen (bzw. Grenzen des Polygons) sind.

Dies führt dann typischerweise für jedes der mehreren Polygone jeweils zu mehreren Lösungen, also mehreren potentiellen Teil-Bewegungspfaden. In einem Schritt 360 kann dann der gesamte Bewegungspfad, der durch Aneinanderreihen jeweiliger Teil-Bewegungspfade (ggf. unter Berücksichtigung nötiger Verbindungspfade), entsteht, bestimmt - also insbesondere optimiert bzw. minimiert - werden. Hierbei können insbesondere gemäß Schritt 370 globale Kostenfaktoren für den Bewegungspfad berücksichtigt werden. Dabei können z.B. gesamte Kosten des Bewegungspfades als eine Kombination von Länge, Drehungen und Überwindungen kritischer Kanten bzw. Unebenheiten bestimmt werden. Dies führt letztlich zu dem Bewegungspfad P, entlang dessen der Staubsaugerroboter bewegt wird.

## Patentansprüche

1. Verfahren zum Bestimmen eines Bewegungspfades (P) auf einem Untergrund (122) in einer Umgebung (120), entlang welchen Bewegungspfades (P) sich ein mobiles Gerät (100), insbesondere ein Roboter, bevorzugt ein Haushalts- oder Staubsaugroboter, bewegen soll, umfassend:
Erhalten (310) von Umgebungsinformationen (I) und Bestimmen (300) eines Bereiches (140) des Untergrunds (122), der durch die Bewegung des mobilen Geräts (100) abgedeckt werden soll,
Bestimmen (315), unter Berücksichtigung der Umgebungsinformationen (I), ob sich innerhalb des Bereiches (140) wenigstens eine von dem mobilen Gerät (100) überwindbare Unebenheit (126) in dem Untergrund (122) befindet, und
Bestimmen (360) des Bewegungspfades (P) unter Berücksichtigung der wenigstens einen Unebenheit (126), wenn eine solche vorhanden ist,
**dadurch gekennzeichnet, dass** das Bestimmen des Bewegungspfades (P) eine Minimierung von Kosten einer Länge des Bewegungspfades umfasst, wobei Kosten für Bewegungspfadabschnitte, in denen die wenigstens eine Unebenheit überschritten wird, höher gewichtet werden als für übrige Bewegungspfadabschnitte.

2. Verfahren nach Anspruch 1, wobei das Bestimmen des Bewegungspfades (P) umfasst, eine Anzahl an Überwindungen (T) der wenigstens einen Unebenheit (126) durch den Bewegungspfad zu minimieren, und zwar unter Berücksichtigung einer gesamten Länge des Bewegungspfades (P) .

3. Verfahren nach Anspruch 1 oder 2, wobei das Bestimmen des Bewegungspfades (P) umfasst, dass der Bereich in mehrere Teilbereiche unterteilt wird, innerhalb welcher jeweils ein Teil-Bewegungspfad (P1, P2) bestimmt wird, wobei die Teilbewegungspfade (P1, P2) zusammenhängen und den Bewegungspfad (P) bilden, und wobei die wenigstens eine Unebenheit (126) wenigstens einen Teilbereich zumindest teilweise begrenzt.

4. Verfahren nach Anspruch 3, wobei das Bestimmen eines jeden Teil-Bewegungspfads (P1, P2) eine Minimierung einer Länge des Bewegungspfades (P) umfasst.

5. Verfahren nach einem der vorstehenden Ansprüche, wobei die wenigstens eine Unebenheit (126) wenigstens eines von einer Stufe, einer Erhebung und einer Absenkung in dem Untergrund umfasst.

6. Verfahren nach einem der vorstehenden Ansprüche, wobei der Bereich (140) des Untergrunds (122), der durch die Bewegung des mobilen Geräts (100) abgedeckt werden soll, unter Berücksichtigung von Informationen über wenigstens ein von dem mobilen Gerät (100) nicht überwindbares Hindernis (130) bestimmt wird.

7. Verfahren nach einem der vorstehenden Ansprüche, wobei die Umgebungsinformationen (I) zumindest teilweise unter Verwendung einer Kamera (104) und/oder eines Inertialsensors und/oder einer Odometrie erhalten werden.

8. Verfahren nach einem der vorstehenden Ansprüche, wobei, wenn der bestimmte Bewegungspfad (P) von dem mobilen Gerät (100) einmal vollständig durchlaufen worden ist, der Bewegungspfad von Neuem bestimmt oder angepasst wird.

9. Verfahren nach einem der vorstehenden Ansprüche, wobei das mobile Gerät (100) entlang des bestimmten Bewegungspfades (P) bewegt wird.

10. Recheneinheit (102), die dazu eingerichtet ist, alle Verfahrensschritte eines Verfahrens nach einem der vorstehenden Ansprüche durchzuführen.

11. Mobiles Gerät (100) mit wenigstens einer Sensoreinheit zum Erfassen von Umgebungsinformationen (I) und einer Recheneinheit (102) nach Anspruch 10.

12. Mobiles Gerät (100) nach Anspruch 11, das als Haushaltsroboter, insbesondere Saug- und/oder Wischroboter, oder als Boden- oder Straßenreinigungsgerät oder als Rasenmäher ausgebildet ist.

13. Computerprogramm, das eine Recheneinheit (102) dazu veranlasst, alle Verfahrensschritte eines Verfahrens nach einem der Ansprüche 1 bis 9 durchzuführen, wenn es auf der Recheneinheit (102) ausgeführt wird.

14. Maschinenlesbares Speichermedium mit einem darauf gespeicherten Computerprogramm nach Anspruch 13.

## Claims

1. Method for determining a path of movement (P) on a surface (122) in an environment (120), along which path of movement (P) a mobile device (100), in particular a robot, preferably a domestic or vacuum-cleaning robot, is intended to move, said method comprising:
obtaining (310) environmental information (I) and determining (300) a region (140) of the surface (122) that is intended to be covered by the movement of the mobile device (100);
while taking into consideration the environmental information (I), determining (315) whether there is within the region (140) at least one unevenness (126) in the surface (122) that can be surmounted by the mobile device (100); and
if there is, determining (360) the path of movement (P) while taking into consideration the at least one unevenness (126),
**characterized in that** determining the path of movement (P) includes minimizing costs of a length of the path of movement, wherein costs for sections of the path of movement in which the at least one unevenness is surmounted are given a higher weighting than other sections of the path of movement.

2. Method according to Claim 1, wherein determining the path of movement (P) includes minimizing a number of surmountings (T) of the at least one unevenness (126) by the path of movement, specifically while taking into consideration the overall length of the path of movement (P).

3. Method according to Claim 1 or 2, wherein determining the path of movement (P) includes dividing the region into a plurality of sub-regions, within each of which a sub-path of movement (P1, P2) is determined, wherein the sub-paths of movement (P1, P2) are linked together and form the path of movement (P), and wherein the at least one unevenness (126) at least partially delimits at least one sub-region.

4. Method according to Claim 3, wherein determining each sub-path of movement (P1, P2) includes minimizing a length of the path of movement (P).

5. Method according to one of the preceding claims, wherein the at least one unevenness (126) includes at least one of the following: a step, a raised area or a sunken area in the surface.

6. Method according to one of the preceding claims, wherein the region (140) of the surface (122) that is intended to be covered by the movement of the mobile device (100) is determined while taking into consideration information concerning at least one obstacle (130) that cannot be surmounted by the mobile device (100).

7. Method according to one of the preceding claims, wherein the environmental information (I) is obtained at least partially by using a camera (104) and/or an inertial sensor and/or odometry.

8. Method according to one of the preceding claims, wherein, once the mobile device (100) has completely passed along the determined path of movement (P), the path of movement is newly determined or adjusted.

9. Method according to one of the preceding claims, wherein the mobile device (100) is moved along the determined path of movement (P).

10. Computing unit (102), which is designed to carry out all the method steps of a method according to one of the preceding claims.

11. Mobile device (100) with at least one sensor unit for sensing environmental information (I) and a computing unit (102) according to Claim 10.

12. Mobile device (100) according to Claim 11, which is formed as a domestic robot, in particular a vacuum-cleaning and/or mopping robot, or as a floor-cleaning or street-cleaning device or as a lawn mower.

13. Computer program, which causes a computing unit (102) to carry out all the method steps of a method according to one of Claims 1 to 9 when it is run on the computing unit (102).

14. Machine-readable storage medium with a computer program according to Claim 13 stored on it.

## Revendications

1. Procédé destiné à déterminer un trajet de déplacement (P) sur un sol (122) dans un environnement (120), le long duquel trajet de déplacement (P) un appareil mobile (100), en particulier un robot, de préférence un robot domestique ou un aspirateur robot, est censé se déplacer, comprenant :
obtention (310) d'informations d'environnement (I) et détermination (300) d'une zone (140) du sol (122), qui est censée être couverte par le déplacement de l'appareil mobile (100),
détermination (315), en tenant compte des informations d'environnement (I), si au moins une irrégularité (126) pouvant être surmontée par l'appareil mobile (100) se trouve sur le sol (122) à l'intérieur de la zone (140), et détermination (360) du trajet de déplacement (P) en tenant compte de l'au moins une irrégularité (126), le cas échéant,
**caractérisé en ce que** la détermination du trajet de déplacement (P) comprend la minimisation des coûts d'une longueur du trajet de déplacement, des coûts pour des sections de trajet de déplacement dans lesquelles l'au moins une irrégularité est dépassée étant pondérés de manière plus élevée que pour des sections de trajet de déplacement restantes.

2. Procédé selon la revendication 1, la détermination du trajet de déplacement (P) comprenant la minimisation d'un nombre de dépassements (T) de l'au moins une irrégularité (126) par le trajet de déplacement, à savoir en tenant compte d'une longueur totale du trajet de déplacement (P).

3. Procédé selon la revendication 1 ou 2, la détermination du trajet de déplacement (P) comprenant la division de la zone en plusieurs zones partielles à l'intérieur desquelles respectivement un trajet de déplacement partiel (P1, P2) est déterminé, les trajets de déplacement partiels (P1, P2) formant des corrélations et le trajet de déplacement (P), et l'au moins une irrégularité (126) délimitant au moins en partie au moins une zone partielle.

4. Procédé selon la revendication 3, la détermination de chaque trajet de déplacement partiel (P1, P2) comprenant la minimisation d'une longueur du trajet de déplacement (P).

5. Procédé selon l'une des revendications précédentes, l'au moins une irrégularité (126) comprenant au moins un d'un gradin, d'une partie surélevée et d'une dépression dans le sol.

6. Procédé selon l'une des revendications précédentes, la zone (140) du sol (122), qui est censée être couverte par le déplacement de l'appareil mobile (100), étant déterminée en tenant compte d'informations concernant au moins un obstacle (130) qui ne peut pas être surmonté par l'appareil mobile (100).

7. Procédé selon l'une des revendications précédentes, les informations d'environnement (I) étant obtenues au moins en partie en utilisant une caméra (104) et/ou un capteur à inertie et/ou une odométrie.

8. Procédé selon l'une des revendications précédentes, le trajet de déplacement étant déterminé ou adapté à nouveau lorsque le trajet de déplacement (P) déterminé a été complètement parcouru par l'appareil mobile (100).

9. Procédé selon l'une des revendications précédentes, l'appareil mobile (100) étant déplacé le long du trajet de déplacement (P) défini.

10. Unité de calcul (102) qui est mise au point pour mettre en œuvre toutes les étapes de procédé d'un procédé selon l'une des revendications précédentes.

11. Appareil mobile (100) avec au moins une unité de détection destinée à détecter des informations d'environnement (I) et une unité de calcul (102) selon la revendication 10.

12. Appareil mobile (100) selon la revendication 11, qui est formé comme un robot domestique, en particulier un aspirateur robot et/ou un robot de nettoyage ou un appareil de nettoyage des sols ou des voies publiques ou comme une tondeuse à gazon.

13. Programme informatique qui amène une unité de calcul (102) à mettre en œuvre toutes les étapes d'un procédé selon l'une des revendications 1 à 9, lorsqu'il est exécuté sur l'unité de calcul (102).

14. Support de stockage lisible par machine avec un programme informatique stocké dans celui-ci selon la revendication 13.
